# EUROPEAN PATENT APPLICATION

(11) **EP 1 863 312 A1**
(43) Date of publication of application: **05.12.2007**
(21) Application number: 07104961.3
(22) Date of filing: 27.03.2007
(51) Int. Cl.: H04Q 7/38

(54) **Improved device for controlling power and load of cells of a mobile network by estimation of temporal evolutions of the measured powers and loads**

(30) Priority: 30.03.2006 FR 0651121
(71) Applicant: Alcatel Lucent, 75008 Paris (FR)
(72) Inventor: Moinet, Grégoire, 93220, GAGNY (FR); Blanc, Patrick, 92130, ISSY LES MOULINEAUX (FR)
(74) Representative: El Manouni, Josiane

(57) **Abstract**

A device (D) is dedicated to controlling the transmission power and the reception load in cells (C1-C2) associated with base stations (N1-N2) of a radio access network, for a radio network controller (R1) coupled to the base stations. This device (D) comprises processor means (MT) responsible, in case of reception of a request for setting up/suppressing/reconfiguring a radio link in a cell (Ci), requiring a transmission power or a reception load, for accepting the request i) if the sum of the required transmission power and an estimate of the current value of the transmission power in the cell (C1) is lower than a first threshold or ii) if the sum of the required reception load and an estimate of the current value of the reception load in that cell (C1) is lower than a second threshold. The processor means (MT) estimate the current value of the power or the load in the cell (C1) as a function of an estimate of the temporal evolution of the power or the load induced in the cell (C1) by modifications of link(s) that have occurred since the reception of the latest power and load measurements in this cell (C1), as a function of the type of link and of the configuration of the radio access network imposed by that type of link.

## Description

The invention concerns radio communication networks, of mobile or cellular type, and more precisely controlling the transmission power dedicated to the downlinks and the reception load induced by the uplinks in cells of such mobile or cellular networks.

Here "downlink" means a link for transmitting data from a radio access network (of a mobile network) to a mobile communication terminal and "uplink" means a link for transmitting data from a mobile communication terminal to a radio access network (of a mobile network).

Moreover, "radio access network" here means the set of network equipments and communication interfaces that enable the exchange of data between radio communication terminals and a core network of a mobile network. Such a radio access network comprises in particular base stations (called BTS in the case of a GSM type network and Node B in the case of a UMTS type network) each associated with at least one (logical) radio cell and radio network controllers (called BSC in the case of a GSM type network and RNC in the case of a UMTS type network) each controlling at least one base station.

Also, "radio communication terminal" here means any mobile (or portable or again cellular) communication equipment capable of exchanging multimedia data by radio with another (mobile or non-mobile) equipment through the intermediary of a radio access network. Consequently, it could be a question of a mobile (or cellular) telephone, for example, a communicating personal digital assistant (PDA) or a portable computer (or "laptop").

As the man skilled in the art knows, in certain mobile networks, such as UMTS type networks, for example, the power that is used for transmission on the downlinks in each cell and the reception load on each uplink are controlled. This control is intended, on the one hand, to prevent the transmission power used in a cell from exceeding a maximum value chosen as a function of the capacity of the power amplifiers of the base station that is associated with it and, on the other hand, to prevent the reception load induced in a cell by the uplinks to cause interference in adjacent cells of a kind to degrade the quality of reception and decoding in their base stations.

This control is effected in the radio network controllers by means of an algorithm such as that known by the acronym RAC (standing for "Radio Admission Control"). It is effected, each time that a radio network controller receives from a base station that it controls a link modification request relating to a cell that is associated with it, in order to determine if the request can be satisfied. By definition, "link modification request" here means a request to set up or reconfigure or suppress a link.

Each radio link modification request received by a radio network controller comprises at least information that defines the required transmission power (in the case of a downlink) or the required reception load (in the case of an uplink) for this radio link modification.

Control consists either in comparing to a power threshold the sum of the transmission power required for a link modification in a cell and the latest known value of the transmission power actually used in that cell or in comparing to a load threshold the sum of the reception load required for a link modification in a cell and the latest known value of the actual reception load in that cell. The known power and load values are transmitted periodically to the radio network controllers by the base stations that they control, for example in NBAP type messages called "COMMON MEASUREMENT REPORT" messages in the case of a UMTS network. They result from measurements effected periodically by each base station.

If a power sum is lower than the power threshold, or if a load sum is lower than the load threshold, the radio network controller concerned authorizes the base station that sent it the link modification request to proceed with that modification. In the contrary situation, the request is rejected.

This type of algorithm offers satisfactory results if a radio network controller receives only one link modification request in the time interval that separates the reception of two successive series of power and load measurements relating to the cell concerned. In fact, at the moment at which the request arrives the latest measurements received substantially correspond to the current power and load in the cell.

However, this is no longer the case if a radio network controller receives at least two link modification requests for the same cell in the time interval that separates the reception of two successive series of power and load measurements relating to that cell. In fact, in this latter situation, the radio network controller is constrained to use for each request after the first the latest power and load values, which do not take into account the transmission power and/or reception load modifications induced by the acceptance of one or more earlier requests. As a result of this the radio network controller may accept a request for a cell even though the real radio conditions in that cell do not allow it or refuse a request for a cell even though the real radio conditions in that cell do allow it.

To improve the situation, it would be possible to increase the power and load measurement transmission periodicity. However, this would have the consequence of very significantly increasing the signaling traffic at the level of the interface between the base station and the radio network controller and the times taken to process the measurements relating to the cells at the level of the radio network controllers.

It has also been proposed, in particular in the patent document WO 01/35692, to compare the power (or load) threshold not to the sum of the power (or load) required and the latest known power (or load) measurement but instead to the sum of the power (or load) required and the estimated current value of the power (or load). This estimate is in fact the result of adding the latest known power (or load) measurement and the sum of all the required powers (or loads) since the reception of the latest power and load measurements.

This solution significantly improves the situation, but nevertheless amounts to considering that the required power or load is a value that is constant in time in the radio access network, which is not the case in many situations, such as in the case of setting up a new link or reconfiguring a link, for example. It must in fact be remembered that there generally exists an adaptation time between the moment at which a link modification request is accepted and the moment at which all of the power (or load) required for that link modification is actually used. This results in particular from the so-called "forget factor" filtering that is effected in the base stations. It must be remembered that this filtering may be effected at one or two levels: firstly, internally, on the values that the base station takes into account, and secondly on the value of the measurement that is reported by the base station (i.e. transmitted to the associated radio network controller). Moreover, in certain types of link, the power (or the load) required is used only progressively and not fully and immediately. This is the case of the transmission of packets by means of a TCP protocol using a so-called "slow start" mechanism, for example. Moreover, the solution described hereinabove does not take into account situations in which the activation/reconfiguration/suppression is delayed.

No known solution providing entire satisfaction, an object of the invention is therefore to improve on the situation.

To this end it proposes a device dedicated to controlling the transmission power and the reception load in cells associated with base stations of a radio access network, for a radio network controller coupled to those base stations, and comprising processor means responsible, in case of reception of a request for setting up/suppressing/reconfiguring a radio link in a cell, requiring a transmission power or a reception load, for accepting said request i) if the sum of the required transmission power and an estimate of the current value of the transmission power in the cell is lower than a first threshold or ii) if the sum of the required reception load and an estimate of the current value of the reception load in the cell is lower than a second threshold.

This control device is characterized in that its processor means are responsible for estimating temporal evolutions of the transmission power and/or the reception load induced in a cell by modifications of link(s) that have occurred since the reception of the latest transmission power and reception load measurements in that cell, as a function of the type of link and of the configuration of the radio access network imposed by that type of link, and, in case of reception of a request relating to a link in that cell, for estimating the current value of the transmission power or the reception load in the cell as a function of the corresponding temporal evolution estimate.

The device according to the invention may have other features and in particular, separately or in combination:
- its processor means may be responsible for estimating the current value of the transmission power in a cell from the sum of the value of the latest transmission power measurement received for that cell and the estimate of the temporal evolution of the transmission power induced in that cell after the modifications of link(s) authorized since the reception of the latest transmission power measurement;
- its processor means may be responsible for constituting transmission power temporal evolutions each comprising a first part that is constant in time, representing the value of the transmission power when the required power is reached relating to a link modification, and having a temporal length that is a function of the time for which the link modification is deferred, and/or a second part, extending the first part, if any, with an amplitude decreasing with time as a function of each type of filtering (of the values taken into account and/or the reported measurement values) effected in the base station that is associated with the cell that is the subject matter of the request received and of the temporal evolution of the actual power requirement in that cell;
- its processor means may be responsible for estimating the current value of the reception load in a cell from the sum of the value of the latest reception load measurement received for that cell and the estimate of the temporal evolution of the reception load induced in that cell after the modifications of link(s) authorized since the reception of the latest reception load measurement;
- its processor means may be responsible for constituting reception load temporal evolutions each comprising a first part that is constant in time, representing the value of the reception load when the required reception load is reached relating to a link modification, and a second part, extending the first part, with an amplitude decreasing with time as a function of the type of filtering effected in the base station associated with the cell that is the subject matter of the request received and of the temporal evolution of the actual reception load requirement in that cell;
- its processor means may be responsible for periodically estimating the transmission power and reception load temporal evolutions relating to the cells;
- alternatively, its processor means may be responsible for estimating the transmission power or reception load temporal evolution relating to a cell in case of reception of a request relating to a link in that cell;
- the modifications of link(s) may be chosen, for example, from at least a new link set-up, a transition of a packet-switched link from a Cell_FACH type state to a Cell_DCH type state, an additional link induced by an intercellular transfer (or "handover"), for example of "soft" or "softer type, a link reconfiguration and a link suppression;
- the configuration of the radio access network may be defined, for example, by at least one parameter chosen from at least the type of filtering effected by the base station coupled to the cell that is the subject matter of the request received, the time interval between two transmission power and reception load measurement receptions relating to the same cell, and the link activation time or activation delay.

The invention also proposes a radio network controller, for a radio access network of a cellular network, equipped with a control device of the type described hereinabove.

The invention is particularly well adapted, although not exclusively so, to UMTS type mobile communication networks. However, the invention is generally concerned with any (tele)communication network in which power control is effected outside the (sender) base stations.

Other features and advantages of the invention will become apparent on reading the following detailed description and examining the appended drawings, in which:
- figure 1 shows very diagrammatically and functionally a portion of a UMTS network comprising a radio access network provided with radio network controllers equipped with one embodiment of a control device according to the invention,
- figure 2 shows diagrammatically one example of a curve of the evolution as a function of time of the transmission power used to set up a new link in a cell,
- figure 3 shows diagrammatically one example of a curve of the temporal evolution of the transmission power used after the setting up of a new link in a cell, and
- figure 4 shows diagrammatically one example of a curve of the temporal evolution of the transmission power used after a suppression of a link in a cell.

The appended drawings constitute part of the description of the invention as well as contributing to the definition of the invention, if necessary.

An object of the invention is to improve the use of radio resources in cells associated with base stations of a radio access network.

It is considered hereinafter by way of nonlimiting example that the radio access network is part of a UMTS type mobile (or cellular) mobile communication network. It consequently constitutes what is referred to as a UTRAN. However, the invention is not limited to this type of mobile (or cellular) communication network. In fact it concerns all mobile (or cellular) mobile communication networks comprising a radio access network in which requests to modify links in cells (setting up new link, suppressing a link and reconfiguring a link) are generated by the base stations and processed by the radio network controllers, on the basis of transmission power and reception load measurements effected by said base stations.

Here "link" means what is referred to as a "Radio Bearer" in a UMTS network, i.e. a link between a radio network controller and a mobile terminal. It must further be remembered that "Radio Access Bearer" (RAB) means a link between the core network and a radio network controller in the case of a UMTS network and that "radio link" means a link between a base station and a radio network controller (i.e. the interface called the lub interface).

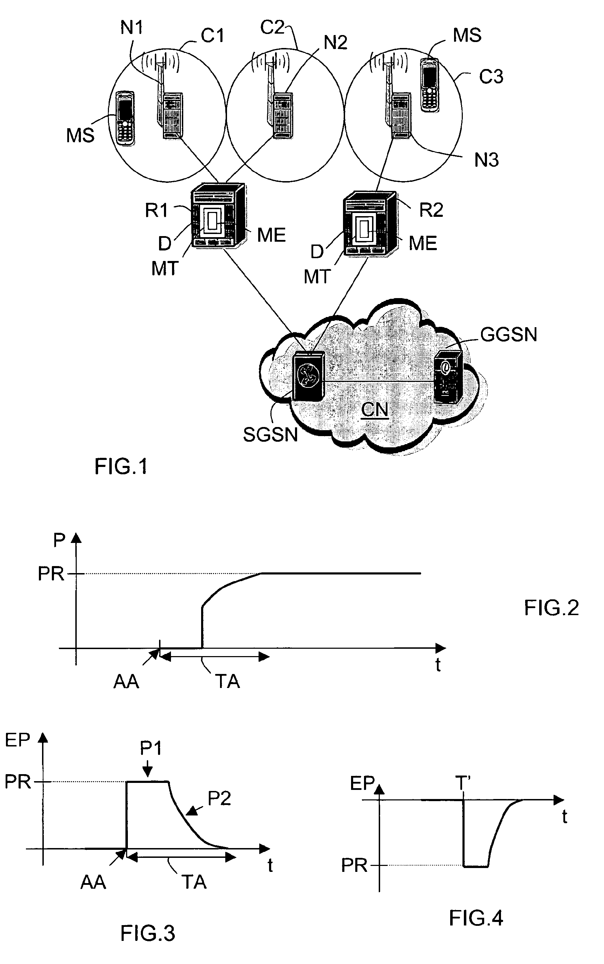

As shown in figure 1, the UMTS network may, very broadly speaking but nevertheless in sufficient detail for the invention to be understood, be summarized as a core network CN coupled to a radio access network (UTRAN) itself connected to a network management system (NMS), not shown.

The radio access network primarily includes interconnected base stations (called Node Bs) Ni and radio network controllers or nodes (called RNCs) Rj.

Each base station Ni is associated with at least one (logical) cell Ci covering a radio area (or coverage area) in which mobile (or cellular) radio communication terminals MS can set up (or continue) radio links.

It is considered hereinafter by way of nonlimiting example that the mobile radio communication terminals MS are mobile (or cellular) telephones. However, the invention is not limited to that type of terminal. It concerns in fact all mobile (or portable or cellular) communication equipments capable of exchanging data by radio with another (mobile or non-mobile) equipment via a radio access network. Consequently, it may equally well be a question of communicating personal digital assistants (PDAs) or portable computers (or "laptops").

In the example shown, only three cells (C1-C3, i = 1 to 3) are shown. However, the index i can take any non-zero value. Moreover, in the example shown, each base station Ni is associated with one cell Ci. However, a base station may be associated with a plurality of cells.

Each radio network controller Rj is coupled to at least one base station Ni. In the example shown, only two radio network controllers (N1 and N2, j = 1 and 2) are shown. The controller R1 is coupled to the base stations N1 and N2 and the controller R2 is coupled to the base station N3. However, the index j can take any non-zero value.

The core network CN comprises network equipments some of which are connected in particular to the radio network controllers Rj. Among these equipments there may in particular be cited at least one SGSN node (SGSN standing for "Serving GPRS Support Node"), connected in particular to radio network controllers Rj, and at least one GGSN node (GGSN standing for "Gateway GPRS Support Node") connected to the SGSN node and providing the connection of the core network CN to a services network (for example of IP type) providing the services made available to the users of the mobile terminals MS by the operator of the UMTS network.

The invention proposes to execute in the radio access network an algorithm for controlling in the cells Ci the transmission power dedicated to downlinks and the reception load induced by uplinks. It is considered hereinafter that this algorithm constitutes an improvement of the RAC (standing for "Radio Admission Control") algorithm described in the introductory part. It must be remembered that this algorithm is intended for determining in the (radio network) controllers Rj if link modification requests relating to cells Ci can be authorized given the transmission power and reception load values used in these cells Ci and transmitted periodically to the controllers Rj by the base stations Ni that they control, for example in NBAP type messages called "COMMON MEASUREMENT REPORT" messages.

As shown in figure 1, the invention proposes to equip each controller Rj with a control device D adapted to interact with an RAC type algorithm. Here "equip" refers either to integrating a control device D into a controller Rj or coupling a control device D to a controller Rj.

A control device D according to the invention essentially comprises a processor module MT for processing each radio link set-up or suppression or reconfiguration request in a cell Ci associated with a base station Ni controlled by the controller Rj that it equips, in order to authorize it or to refuse it.

By definition, "link modification request" hereinafter means a request to set up, reconfigure or suppress a link relating to a given cell Ci. Here "link set-up request" means either a request to create a new link or a request to create an additional link following a "soft", "softer, interfrequency or intercontroller ("InterRNC") type intercellular transfer (or "handover") or an FACH to DCH type state transition enabling recreation of a radio link. Moreover, here "link reconfiguration" means either a transition of a packet switched (PS) link from a Cell_FACH type state to a cell Cell_DCH type state (in the Cell_FACH state the mobile terminal has a relatively low traffic and therefore no longer has dedicated resources, so that it communicates exclusively on common channels, whereas in the Cell_DCH state the mobile terminal has dedicated resources in the radio network controller (RNC) and the base station (Node B) for its calls) or a modification of at least one parameter defining the link (such as the bit rate, for example).

Each time that a controller Rj receives from a base station Ni that it controls a link modification request (including at least the definition of a required transmission power for a downlink or a required reception load for an uplink), it transmits it to the device D that equips it. This request is then processed by the processor module MT of the device D.

Moreover, each time that a controller Rj receives from a base station Ni that it controls an NBAP message (for example of COMMON MEASUREMENT REPORT type) including measured values of the transmission power and the reception load used (at a given time) in a cell Ci, it transmits it to the device D that equips it. These two values are then stored in the device, for example in a memory forming part of the processor module MT. More precisely, these two values replace the values transmitted during the preceding period for the cell Ci concerned.

On reception of a link modification request, the processor module MT determines if it concerns a downlink (required transmission power) or an uplink (required reception load).

If it concerns a downlink, the processor module MT begins by summing the required transmission power PR (defined in the request received) and an estimate PE of the current value of the transmission power in the cell Ci concerned. It then compares the result of this summation to a first threshold S1. If the result is lower than the first threshold S1, the processor module MT authorizes the link modification request and its device D generates an authorization message that is transmitted by the controller Rj that it equips to the base station Ni that generated this request (the link modification is then effected). If the result is higher than the first threshold S1, the processor module MT prohibits the link modification request and its device D generates a prohibition message that is transmitted by the controller Rj that it equips to the base station Ni that generated this request (the link modification is then not effected).

If it concerns an uplink, the processor module MT begins by summing the required reception load CR (defined in the request received) and an estimate CE of the current value of the reception load in the cell Ci concerned. It then compares the result of this summation to a second threshold S2. If the result is lower than the second threshold S2, the processor module MT authorizes the link modification request and its device D generates an authorization message that is transmitted by the controller Rj that it equips to the base station Ni that generated this request (the link modification is then effected). If the result is higher than the second threshold S2, the processor module MT prohibits the link modification request and its device D generates a prohibition message that is transmitted by the controller Rj that it equips to the base station Ni that generated this request (the link modification is then not effected).

Each estimate of the current value of the transmission power PE or the reception load CE of a cell Ci is effected by the processor module MT. It is done for a precise time that is substantially the time of reception of the link modification request in the controller Rj (or the device D that equips it).

To estimate the current value of the transmission power PE or the reception load CE of a cell Ci, the processor module MT uses an estimate of the temporal evolution of the transmission power or the reception load induced in this cell Ci by the modifications of link(s) that have occurred in this cell Ci since the reception of its latest transmission power and reception load measurements. In other words, a temporal evolution estimate represents all the modifications of the radio conditions (power or load) that have occurred in a cell Ci since its latest power and load measurements were communicated to the controller Rj concerned.

For example, if the processor module MT receives a (first) request between first and second transmissions of measured values of the transmission power and the reception load used in a cell Ci, it knows that the radio conditions in that cell have not evolved since the first transmission. The temporal evolution estimate that corresponds to this first request is therefore based on the measured values received at the time of the first transmission.

If the processor module MT now receives first and second requests between first and second transmissions of measured values of the transmission power and the reception load used in a cell Ci, it knows that the radio conditions in the cell Ci may have evolved since the first transmission, because of the first request. The transmission power (or reception load) temporal evolution estimate that corresponds to this second request is therefore based on the sum of the measured transmission power (or reception load) value received at the time of the first transmission and the temporal evolution of the transmission power (or reception load) induced in the case of authorization of the first request.

If the processor module MT now receives first, second and third requests between first and second transmissions of measured values of the transmission power and the reception load used in a cell Ci, it knows that the radio conditions in this cell Ci may have evolved since the first transmission, because of the first request and/or the second request. The transmission power (or reception load) temporal evolution estimate that corresponds to this third request is therefore based on the sum of the measured value of transmission power (or of reception load) received at the time of the first transmission and the sum of the temporal evolutions of the transmission power (or reception load) induced in the case of authorization of the first and/or second requests.

Each temporal evolution estimate is effected by the processor module MT either periodically or on reception of a link modification request.

By way of purely illustrative and nonlimiting example, the periodic temporal evolution estimates may be effected every 10 ms if the cell measurements transmission frequency is of the order of one second.

This type of estimate has the advantage of reducing the time necessary for the processor module MT to estimate the current value of the transmission power (or the reception load) in a cell. In fact it is sufficient for it to use the latest temporal evolution estimate. However, the updating of the estimates being periodic, if two requests are received between two successive temporal evolution estimates, the influence of the first request received on the latest temporal estimate calculated cannot be taken into account. As shown in figure 1, the processor module MT may include an estimator sub-module ME for effecting the periodic temporal evolution estimates.

Estimating temporal evolution in real time slows the speed at which the current value of the transmission power (or the reception load) in a cell Ci is estimated, but is more accurate because it takes into account all the temporal evolution estimates, including the most recent one.

According to the invention, each temporal evolution estimate is effected as a function of the type of link that is the subject matter of a modification request and of the configuration of the radio access network that is imposed by that type of link. Here "type of link" means a set of characteristics defining a link. Consequently, links of different types correspond to different sets of characteristics. The "circuit" (CS) or "packet" (PS) character of a link constitutes only one characteristic of that link.

The invention concerns any type of link. Here the type of a link defines the manner in which that link must be set up. For example, some links necessitate substantially all of the required power PR to be used almost immediately, whereas some other links necessitate the required power PR to be used progressively (this is the case, for example, of the transmission of packets by means of a TCP protocol using a "slow start" mechanism).

At least some of the characteristics that define the link type are transmitted in the link modification request. For example, in the case of creating a new RAB and therefore a new Radio Bearer, all the characteristics are transmitted. On the other hand, in the case of an FACH to DCH type transition, a link reconfiguration or a link suppression, one of the characteristics (CS or PS) is already known.

Figure 2 represents one example of a curve of the evolution as a function of time (t) of the transmission power P used to set up a new link in a cell Ci. In this figure 2, the reference PR indicates the nominal power required for the link, the reference AA indicates on the time axis (t) the moment at which the processor module MT authorizes setting up the new link in the cell Ci, and the reference TA indicates on the time axis (t) the adaptation time that corresponds to the time necessary for a base station Ni to activate the new link or to delay its activation because of the (forget factor) filtering effected locally (which is generally defined by a coefficient that is transmitted at the time of configuring the measurements (the required filtering coefficient is indicated when the "COMMON MEASUREMENTS" are configured), and/or because of the type of the new link.

This example corresponds to a link necessitating substantially all of the required power PR almost immediately. A power utilization profile that is initially less steep (and therefore more progressive) would correspond to a link necessitating a progressive use of the required nominal power PR.

The configuration of the radio access network is defined by one or more parameters that depend on the link concerned. Of these parameters there may be in particular cited each type of filtering that is effected by the base station Ni that is associated with the cell Ci that is the subject matter of a request (on the values taken into account and/or on the values of the measurements reported), the time interval between two transmissions (and therefore two receptions) of transmission power and reception load measurements relating to a cell Ci that is the subject matter of a request, and the activation time or the activation delay of a link that is the subject matter of a request.

The processor module MT can determine temporal evolution curves of any type, what is important being that the trend of the curves corresponds as closely as possible to reality. For example, and as shown in figure 3 by way of nonlimiting example, the temporal evolution curve of the transmission power PE following the setting up of a new link in a cell Ci may comprise two parts P1 and P2.

The first part P1 is constant in time, for example. It represents the value of the transmission power when the nominal power PR is reached that is requested in a link modification request. The power that corresponds to the intersection with the time axis (t) is here the zero power. The first part P1 begins here at the time AA that substantially corresponds to the moment at which the setting up of the new link is authorized by the device D and terminates at a moment within the activation time TA. The duration of the first part P1 is a function of the duration of the deferment of use of the power for the link concerned. This duration is a parameter that is indicated in the link modification request message, generally in a field called the CFN (temporal reference) field. The situation shown in figure 3 corresponds substantially to that shown in figure 2. It will be noted that in this situation the modification is effected only after the delay (deferment), and the power is consumed later. In the absence of deferment the first part P1 does not exist.

The second part P2 extends the first part P1 in time. Here it has an amplitude that decreases with time (t) as a function of the type of filtering that is effected in the base station Ni that is associated with the cell Ci that is the subject matter of the request received and as a function of the temporal evolution of the actual power requirement in this cell Ci given the type of link concerned. Consequently, the decrease in the amplitude is faster or slower according to the service that corresponds to the type of the link set up. This amplitude preferably decreases toward the value 0 (zero power) at the end of the activation time TA, when the required power PR of the new link set up is totally taken into account in the new measurements effected by the base station Ni that is associated with the cell Ci that this new link concerns.

It must be remembered that the actual power requirement at a given time depends on the type of link concerned. For example, if the link is of PS (packet switched) RAB type and the transport protocol is TCP (with the slow start mechanism), the shape of the curve takes into account the fact that the power used increases progressively ("ramp up"). In the case of a CS (circuit switched) RAB type connection, there is no progressive increase to take into account.

If the link modification consists in reconfiguring a pre-existing link, the process is as described hereinabove, in particular if the reconfiguration necessitates an increase in the transmission power.

In the case of a link reconfiguration or a link suppression necessitating a reduction of the transmission power the process is the same, but using a negative required power. Such a situation is shown diagrammatically in figure 4. It corresponds more precisely to an example of the temporal evolution curve of the transmission power PE used after the suppression of a link in a cell Ci. The reference T' indicates the time at which the suppression of the link is authorized. The curve also comprises a first part P1 and a second part P2. The first part P1 is constant in time, for example, and corresponds to the period during which the power suppression is delayed because of the type of link and/or of each type of filtering. If no delay is introduced into the link suppression request message, then the first part P1 does not exist. The second part P2 increases in time (or decreases in absolute value because it starts from a negative PR value) to the value 0 (zero power). It will be noted that in the case of link suppression there is generally no activation time TA or activation delay and the link type does not influence the temporal decreasing trend of the curve.

If the temporal evolution estimate concerns the reception load induced by a modification on an uplink, the principle described hereinabove in the case of the transmission power for a downlink remains exactly the same except that the processor module MT considers all modifications of the reception load that have occurred since the reception of the latest measurements relating to that cell concerned, and no longer the modifications of the transmission power that have occurred since the reception of the latest measurements relating to the cell concerned.

In the examples described hereinabove with reference to figures 3 and 4, situations are described in which only one power or load temporal evolution estimate is taken into account to estimate the current value of the power or the load in a cell Ci. This is a result of the fact that it was considered that only one link modification request had been processed by a device for a given cell Ci since the reception of the latest measurements relating to that cell Ci. However, as indicated hereinabove, situations may be envisaged in which a plurality of power or load temporal evolution estimates are taken into account to estimate the current value of the power or the load in a cell Ci. In these situations, the processor module MT sums each power or load temporal evolution estimate corresponding to each link modification request that it has processed for the cell Ci concerned since the reception of the latter measurements. It is then the result of this summation of temporal evolution estimates that is used to estimate the current value of the power or the load in a cell Ci at the time of the comparison.

It will be noted that in the examples described hereinabove there has been described the power (or load) that is added to or subtracted from the latest value of the power (or load) measurement transmitted by a controller Rj for a given cell Ci because of a link modification. Consequently, in figures 3 and 4 the value of the power (or load) that is situated at the intersection with the time axis (t) in reality corresponds to the latest value of the power (or load) measurement transmitted by a controller Rj for a given cell Ci.

To estimate the value of the power (or load) used in a cell Ci at a given time (that of processing a received request), the processor module MT determines in the latest power (or load) temporal evolution estimate (or estimate summation) the value of the power (or load) at that given time. This power (or load) value that has been determined is then the estimated value (PE or CE) that is added to the required power (or load) (PR or CR) before being compared to the first threshold P1 (or second threshold P2) to determine if the requested link modification may be authorized.

In a variant, the power (or load) that is added or subtracted, because of a link modification, may be considered without taking as a power reference the latest value of the power (or load) measurement transmitted by a controller Rj for a given cell Ci. In this case, the value of the power (or load) that is situated (in figures 3 and 4) at the intersection with the time axis (t) corresponds to a zero (0) power. To estimate the value of the power (or load) used in a cell Ci at a given time (that of processing a received request), the processor module MT determines in the latest estimate (or sum of estimates) of temporal evolution of the power (or load) the value of the power (or load) at that given time. It then adds that power (or load) value that has been determined to the latest value of the power (or load) measurement transmitted by a controller Rj for the cell Ci concerned. The result of this addition is then the estimated value (PE or CE) that is added to the required power (or load) (PR or CR) before being compared to the first threshold P1 (or second threshold P2) to determine if the requested link modification can be authorized.

The control device D according to the invention, and in particular its processor module MT, may be produced in the form of electronic circuits, software (or electronic data processing) modules or a combination of circuits and software.

The invention provides an improved estimate of the instantaneous radio conditions that apply within cells between two successive transmissions of transmission power and reception load measurements. This improves the management of the power used in each cell and leads to better radio conditions for the mobile terminals, because of a reduction in overload situations.

Moreover, the invention reduces the frequency of transmission of the messages containing the power and load measurements relating to the various cells, and therefore reduces the traffic over the lub interface and the measurement processing time in the radio network controllers.

The invention is not limited to the control device and radio network controller embodiments described hereinabove by way of example only and encompasses all variants that the man skilled in the art might envisage within the scope of the following claims.

## Claims

1. Device (D) for controlling the transmission power dedicated to downlinks and the reception load induced by uplinks in cells (Ci) associated with base stations (Ni) of a radio access network, for a radio network controller (Rj) coupled to said base stations (Ni), said device (D) comprising processor means (MT) adapted, in case of reception of a request for setting up/suppressing/reconfiguring a radio link in a cell (Ci), requiring a transmission power in the case of a downlink or a reception load in the case of an uplink, to accept said request i) if the sum of said required transmission power and an estimate of the current value of the transmission power in said cell (Ci) is lower than a first threshold or ii) if the sum of said required reception load and an estimate of the current value of the reception load in said cell (Ci) is lower than a second threshold, **characterized in that** said processor means (MT) are adapted to estimate temporal evolutions of the transmission power and/or the reception load induced in a cell (Ci) by modifications of link(s) that have occurred since the reception of the latest transmission power and reception load measurements in said cell (Ci), as a function of the type of link and of the configuration of the radio access network imposed by said type of link, and, in case of reception of a request relating to a link in said cell (Ci), to estimate the current value of the transmission power or the reception load in said cell as a function of said corresponding temporal evolution estimate.

2. Device according to claim 1, **characterized in that** said processor means (MT) are adapted to estimate said current value of the transmission power in a cell (Ci) from the sum of the value of the latest transmission power measurement received for that cell (Ci) and said estimate of the temporal evolution of the transmission power induced **in that** cell (Ci) after the modifications of link(s) authorized since the reception of said latest transmission power measurement.

3. Device according to either of claims 1 and 2, **characterized in that** said processor means (MT) are adapted to constitute transmission power temporal evolutions each comprising a first part that is constant in time, representing the value of the transmission power when the required power is reached relating to a link modification, and a second part, extending said first part, with an amplitude decreasing with time as a function of a type of filtering effected in the base station (Ni) associated with the cell (Ci) that is the subject matter of the request received and of the temporal evolution of the actual power requirement in said cell (Ci) that is the subject matter of the request received given the type of link concerned.

4. Device according to any one of claims 1 to 3, **characterized in that** said processor means (MT) are adapted to estimate said current value of the reception load in a cell (Ci) from the sum of the value of the latest reception load measurement received for that cell (Ci) and said estimate of the temporal evolution of the reception load induced **in that** cell (Ci) after the modifications of link(s) authorized since the reception of said latest reception load measurement.

5. Device according to any one of claims 1 to 4, **characterized in that** said processor means (MT) are adapted to constitute reception load temporal evolutions each comprising a first part that is constant in time, representing the value of the reception load when the required reception load is reached relating to a link modification and having a temporal length that is a function of the period during which the link modification is deferred, and/or a second part, extending said first part, if any, with amplitude decreasing with time as a function of each type of filtering effected in the base station (Ni) associated with the cell (Ci) that is the subject matter of the request received and of the temporal evolution of the actual reception load requirement in said cell (Ci) that is the subject matter of the request received given the type of link concerned.

6. Device according to any one of claims 1 to 5, **characterized in that** said processor means (MT) are adapted periodically to estimate said transmission power and reception load temporal evolutions relating to said cells (Ci).

7. Device according to any one of claims 1 to 5, **characterized in that** said processor means (MT) are adapted to estimate said transmission power or reception load temporal evolution relating to a cell (Ci) in case of reception of a request relating to a link **in that** cell (Ci).

8. Device according to any one of claims 1 to 7, **characterized in that** said modifications of link(s) are chosen in a group comprising at least a new link set-up, a transition of a packet-switched link from a Cell_FACH type state to a Cell_DCH type state, an additional link induced by an intercellular transfer, a link reconfiguration and a link suppression.

9. Device according to any one of claims 1 to 8, **characterized in that** said configuration of the radio access network is defined by at least one parameter chosen in a group comprising at least a type of filtering effected by the base station (Ni) coupled to the cell (Ci) that is the subject matter of the request received, a time interval between two transmission power and reception load measurement receptions relating to the same cell (Ci), and a link activation time or activation delay.

10. Radio network controller (Rj) for a radio access network of a cellular network, **characterized in that** it comprises a control device (D) according to any one of the preceding claims.
